# EUROPÄISCHE PATENTSCHRIFT

(11) **EP 1 813 502 B1**
(45) Veröffentlichungstag und Bekanntmachung des Hinweises auf die Patenterteilung: **13.08.2008**
(21) Anmeldenummer: 07000366.0
(22) Anmeldetag: 09.01.2007
(51) Int. Cl.: B62B 3/06

(54) **Niederhubwagen mit Lastrollen**
Forklift truck with wheels
Transpalette avec roulettes

(30) Priorität: 31.01.2006 DE 102006004335
(43) Veröffentlichungstag der Anmeldung: 01.08.2007
(73) Patentinhaber: STILL WAGNER GmbH, 72766 Reutlingen-Mittelstadt (DE)
(72) Erfinder: Riegraf, Martin, 72766 Reutingen (DE)
(74) Vertreter: Geirhos, Johann

(56) Entgegenhaltungen:
- EP-A1- 0 439 837
- EP-A2- 1 362 761
- DE-A1- 2 256 898
- DE-A1- 3 614 986
- DE-U1- 20 304 157
- FR-A- 1 525 031
- US-A- 3 612 564

## Beschreibung

Die Erfindung betrifft einen Niederhubwagen gemäß Oberbegriff des Anspruchs 1.

Niederhubwagen der genannten Art besitzen einen nicht anhebbaren Antriebsteil, in dem die Aggregate für den Fahrantrieb des Niederhubwagens angeordnet sind. Die Lastgabel ist relativ zum Antriebsteil mittels eines längenveränderlichen Stellglieds anhebbar und weist zwei im Wesentlichen waagrechte Gabelzinken auf. Das Stellglied kann dabei beispielsweise als Hydraulikzylinder oder als Gewindespindel ausgeführt sein. An das antriebsteilseitige Ende der Gabelzinken schließt sich der Gabelrücken an und erstreckt sich von den Gabelzinken nach oben. Der Gabelrücken dient zur Anbindung der Lastgabel an den Antriebsteil und stützt einen Teil der Gewichtskraft der Lastgabel und einer gegebenenfalls darauf befindlichen Last über das Stellglied an dem Antriebsteil ab. Der andere Teil der Gewichtskraft wird über Lastrollen, die im vorderen Bereich der Gabelzinken angeordnet sind, direkt an der Fahrbahn abgestützt.

Eine vertikale Bewegung des dem Stellglied benachbarten Teils der Lastgabel, also des Gabelrückens, wird über eine Hebelanordnung auf die Lastrolle übertragen. Dabei ist die Lastrolle mittels eines schwenkbaren Lastrollenträgers an einer Gabelzinke der Lastgabel befestigt. Die Hebelanordnung wirkt über eine Stange auf den Lastrollenträger und verändert die Schwenkposition des Lastrollenträgers in Abhängigkeit von der vertikalen Position des Gabelrückens. Hierdurch ist gewährleistet, dass die Lastgabel stets parallel zur Fahrbahn angehoben und abgesenkt wird.

Bei Niederhubwagen des Standes der Technik ist die Hebelanordnung im Bereich der Schnittstelle zwischen Lastgabel und Antriebsteil angeordnet. Einzelne Hebel sind dabei einerseits am Antriebsteil und andererseits an der Lastgabel gelenkig gelagert. Dies bedeutet, dass die Hebelanordnung erst montiert und eingestellt werden kann, nachdem die Lastgabel mit dem Antriebsteil verbunden wurde. Die Montage der Hebelanordnung wird durch die engen räumlichen Verhältnisse und eine oft ungünstige Montageposition erschwert.

Aus der DE 36 14 986 A1 ist ein gattungsgemäßen Hubwagen bekannt, bei dem der Antriebsteil relativ zum Lastteil mittels eines Hubzy inders anhebbar ist. Zum Anheben der an den Lastgabeln angeordneten Lastrollen ist eine Hebelanordnung vorgesehen, die von einem Winkelhebel, einer Verbindungslasche und einem bogenförmigen Schwenkhebel besteht. Der bogenförmige Schwenkhebel ist mittels einer ersten Schwenkachse an der Lastgabel schwenkbar gelagert. An einer weiteren Schwenkachse des Schwenkhebels greift eine zu der Lastrolle führende Längsstange an. An einer weiteren Gelenkachse des Schwenkhebels ist die Verbindungslasche angeordnet, die an dem zweiarmigen Winkelhebel gelenkig gelagert ist. Der Winkelhebel ist hierbei an dem Antriebsteil des Hubwagens gelagert und steht mit einem weiteren Steuerzylinder in Verbindung, wobei an dem Winkelhebel eine Stützrolle angeordnet ist, die mit einer Führungsbahn an dem Lastteil in Wirkverbindung bringbar ist. Mit einer derartigen Ausbildung der Hebelanordnung kann ein Rampenhub erzielt werden, bei dem der Lastteil ohne Betätigung der Lastrollen angehoben werden kann.

Die US 3 612 564 offenbart einen gattungsgemäßen Hubwagen mit einem zweiteiligen Gelenkdreieck. Ein erster Abschnitt des Gelenkdreiecks ist mittels einer Gelenkachse am Rahmen schwenkbar gelagert und steht über eine weitere Gelenkachse mit einer Kolbenstange des Hubzylinders in Verbindung. Ein zweiter Abschnitt des Gelenkdreiecks ist mittels einer weiteren Gelenkachse an der Lastgabel schwenkbar gelagert und über eine weitere Gelenkachse mit einer zu den Lastrollen geführten Längsstange verbunden. Der erste Abschnitt des Gelenkdreiecks ist gabelförmig ausgebildet, wodurch der zweite Abschnitt des Gelenkdreiecks in einer mittigen Position sowie einer seitlichen Position des ersten Abschnitts des Gelenkdreiecks befestigt werden kann, um Hubwagen mit unterschiedlichen Gabelbreiten zu erzielen.

Der vorliegenden Erfindung liegt die Aufgabe zugrunde, einen Niederhubwagen zur Verfügung zu stellen, bei dem die Hebelanordnung zum Verstellen der Lastrollen einfach montierbar ist und die Lastgabeln auf einfache Weise feinjustiert werden können.

Diese Aufgabe wird erfindungsgemäß durch die Merkmale des Oberbegriffs des Anspruchs 1 in Verbindung mit den Merkmalen des kennzeichnenden Abschnitts des Anspruchs 1 gelöst.

Mit dem Mittel zum Feineinstellen der Rotationsposition des Gelenkdreiecks kann eine Feinjustierung der Stellung der Lastrollen vorgenommen werden. Das Gelenkdreieck kann hierbei geringfügig gedreht werden, zum Beispiel wenn ein Mittel zum Einstellen der Länge der Stange, die mit der zweiten Gelenkachse verbunden ist, vorgesehen ist.

Das Gelenkdreieck weist drei zueinander parallele Gelenkachsen auf, die in einem Dreieck angeordnet sind. Die konstruktive Ausführung des Gelenkdreiecks kann auf verschiedenste Weise erfolgen. Möglich ist es beispielsweise, die drei Gelenkachsen an einem starren einstückigen Winkelhebel anzuordnen. Ebenfalls möglich ist es, das Gelenkdreieck als Dreieck aus drei Zug- bzw. Druckstangen auszuführen, wobei die Gelenkachsen dann an den Ecken des Dreiecks angeordnet sind. Die drei Gelenkachsen sind unabhängig von der Bauform immer in Querrichtung des Niederhubwagens ausgerichtet. Mit der ersten Gelenkachse ist das Gelenkdreieck an der Lastgabel oder an einem starr mit der Lastgabel verbunden Bauteil gelagert. Die Stange, die das Gelenkdreieck über die zweite Gelenkachse mit dem Antriebsteil verbindet, ist zumindest annähernd vertikal ausgerichtet. Vorzugsweise ist sie als Druckstange ausgeführt und erstreckt sich von der zweiten Gelenkachse nach oben. Die Längsstange, die an der dritten Gelenkachse angreift, ist zumindest annähernd horizontal ausgerichtet und erstreckt sich längs einer Gabelzinke der Lastgabel. Die Gelenkachsen sind so angeordnet, dass das Gelenkdreieck gedreht wird, wenn die Lastgabel mittels des Stellglieds angehoben wird. Die dritte Gelenkachse bewegt sich dabei dann in horizontaler Richtung, sodass die zu der Lastrolle führende Längsstange in Längsrichtung verschoben wird. Das Gelenkdreieck ist hierbei an der zweiten Gelenkachse nicht direkt, sondern über die Stange mit dem Antriebsteil verbunden. Die beidseitig gelenkig gelagerte Stange legt die vertikale Position der zweiten Gelenkachse relativ zum Antriebsteil fest, ermöglicht aber einen Lageausgleich in horizontaler Richtung. Die Stange kann an dem vom Gelenkdreieck abgewandten Ende direkt an dem Antriebsteil gelagert sein. Die Montage der Hebelanordnung wird noch weiter erleichtert, wenn die Stange direkt, also über ein am Antriebsteil starr befestigbares Bauteil, mit dem Antriebsteil verbunden ist.

Besonders zweckmäßig ist es beispielsweise, wenn die Stange gelenkig mit einer Verbindungsplatte verbunden ist, welche starr mit dem Antriebsteil verbindbar ist. Die Verbindungsplatte kann an der Lastgabel vormontiert werden, sodass die gesamte Lastgabel einschließlich der Hebelanordnung eine Vormontagegruppe bildet. Im Zuge der Endmontage, wenn die Lastgabel mit dem Antriebsteil verbunden wird, wird auch die Verbindungsplatte starr mit dem Antriebsteil verbunden, beispielsweise verschraubt.

Von Vorteil ist es somit, wenn die starre Verbindung zwischen der Verbindungsplatte und dem Antriebsteil lösbar ist.

Weiter ist es vorteilhaft, wenn ein Mittel zum Einstellen der vertikalen Position der Verbindungsplatte relativ zum Antriebsteil vorgesehen ist. Hierzu kann beispielsweise mindestens eine Einstellschraube vorgesehen sein, die einerseits mit dem Antriebsteil und andererseits mit der Verbindungsplatte verbunden ist. Wenn die starre Verbindung zwischen der Verbindungsplatte und dem Antriebsteil gelöst ist, beispielsweise indem man die Verschraubung lockert, kann die exakte vertikale Position der Verbindungsplatte relativ zum Antriebsteil mittels der Einstellschraube eingestellt werden. Das erforderliche Spiel in der Verschraubung, die zur Befestigung der Verbindungsplatte an dem Antriebsteil dient, kann beispielsweise dadurch hergestellt werden, dass die Schraubenlöcher in der Verbindungsplatte als Langlöcher ausgeführt sind.

Zweckmäßigerweise ist die Druckstange mit einer vierten Gelenkachse an der Verbindungsplatte gelagert.

Sofern hierbei das Mittel zum Einstellen der vertikalen Position der vierten Gelenkachse relativ zu der Verbindungsplatte vorgesehen ist, kann durch eine Veränderung der Position der vierten Gelenkachse das Gelenkdreieck geringfügig gedreht werden und somit eine Feinjustierung der Stellung der Lastrollen vorgenommen werden.

Mit besonderem Vorteil ist das Stellglied derart angeordnet, dass es zwischen der Lastgabel und der Verbindungsplatte wirkt. Gemeinsam mit der Lastgabel und der Verbindungsplatte kann damit auch das Stellglied vormontiert werden. Eine Justierung der Verbindungsplatte am Antriebsteil hat bei dieser Anordnung keine Auswirkungen auf den Hubweg des Stellglieds.

Besonders einfach sind die genannten Montage- und Einstellarbeiten durchzuführen, wenn das Mittel zum Einstellen der vertikalen Position der Verbindungsplatte relativ zum Antriebsteil und das Mittel zum Feineinstellen der Rotationsposition des Gelenkdreiecks derart angeordnet sind, dass die Mittel bei montierter Lastgabel, wenn die Verbindungsplatte mit dem Antriebsteil verbunden ist, zugänglich sind. Die Lastgabel kann beispielsweise eine Abdeckung aufweisen, die zum Durchführen der genannten Arbeiten abgenommen werden kann.

Weitere Vorteile und Einzelheiten der Erfindung werden anhand des in den schematischen Figuren dargestellten Ausführungsbeispiels näher erläutert. Dabei zeigt
- Figur 1: einen erfindungsgemäßen Niederhubwagen in schematischer Seitenansicht,
- Figur 2: die Lastgabel des erfindungsgemäßen Niederhubwagens,
- Figur 3: eine Detailansicht der Mittel zum Einstellen der Lastgabel.

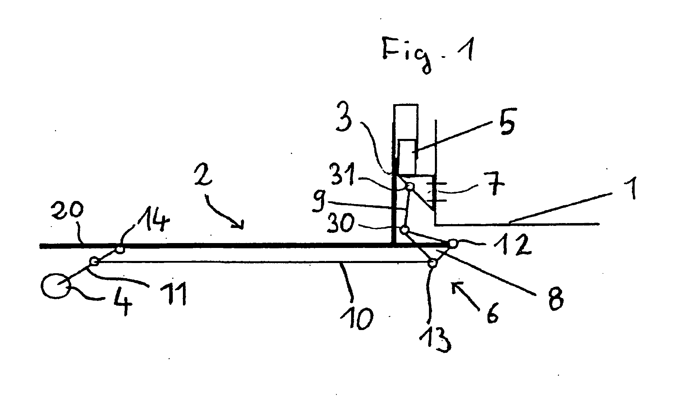

Figur 1 zeigt einen erfindungsgemäßen Niederhubwagen in schematischer Seitenansicht. Zu erkennen ist ein Fahrzeugrahmen eines nicht anhebbaren Antriebsteils 1 des Niederhubwagens, sowie eine Lastgabel 2 mit einem Gabelrücken 3 und zwei Gabelzinken 20. Gabelrücken 3 und Gabelzinken 20 sind starr miteinander verbunden, beispielsweise verschweißt. Die Lastgabel 2 ist an dem Antriebsteil 1 in vertikaler Richtung bewegbar geführt. An dem dem Antriebsteil 1 abgewandten Ende stützt sich die Lastgabel 2 mittels einer verstellbaren Lastrolle 4 an der Fahrbahn ab. Die zum Anheben der Lastgabel 2 erforderliche Kraft wird mittels eines von einem hydraulischen Hubzylinder gebildeten Stellglieds 5 erzeugt, das den Gabelrücken 3 relativ zum Antriebsteil 1 anhebt. Die Hubbewegung des Gabelrückens 3 wird über eine Hebelanordnung 6 auf die Lastrolle 4 übertragen, sodass die Lastgabel 2 im Bereich der Lastrollen 4 synchron zum Gabelrücken 3 angehoben wird.

Ein Zylinderrohr des Stellglieds 5 ist an dem Gabelrücken 3 befestigt. Ein ausfahrbarer Kolben des Stellglieds 5 stützt sich an einer Verbindungsplatte 7, welche bei der Montage der Lastgabel am Antriebsteil 1 mit dem Rahmen des Antriebste ils 1 verschraubt wird, ab. Die Verbindungsplatte 7 ist als Bauteil des Gabelrückens 3 definiert. Die Kraft des Stellglieds 5 wirkt zwischen der mit dem Antriebsteil 1 verbundenen Verbindungsplatte 7 und dem Gabelrücken 3 und ist dadurch geeignet, den Gabelrücken 3 relativ zum Antriebsteil 1 anzuheben.

Die Hebelanordnung 6 umfasst ein Gelenkdreieck 8, eine im Wesentlichen vertikale Stange 9, eine im Wesentlichen horizontale Längsstange 10 und einen Lastrollenträger 11. Das Gelenkdreieck 8 ist mit einer Gelenkachse 12 an den Gabelzinken 20 schwenkbar gelagert. Wenn der Gabelrücken 3 mittels des Hubzylinders angehoben wird, bewegt sich die Gelenkachse 12 mit nach oben. Die Stange 9, die sich einerseits mit der Gelenkachse 30 an dem Gelenkdreieck 8 und andererseits mit der Gelenkachse 31 an der Verbindungsplatte 7 abstützt, bewirkt dabei eine Drehung des Gelenkdreiecks 8 im Gegenuhrzeigersinn um die Gelenkachse 12. Die Gelenkachse 13 bewegt sich dabei gemeinsam mit der Längsstange 10 nach in der Zeichnung rechts. Der Lastrollenträger 11 wird dadurch um die Gelenkachse 14 im Gegenuhrzeigersinn gedreht. Hierdurch vergrößert sich der vertikale Abstand zwischen der Lastrolle 4 und der Lastgabel 2, sodass die Gabelspitze der Lastgabel 2 synchron zum Gabelrücken 3 angehoben wird.

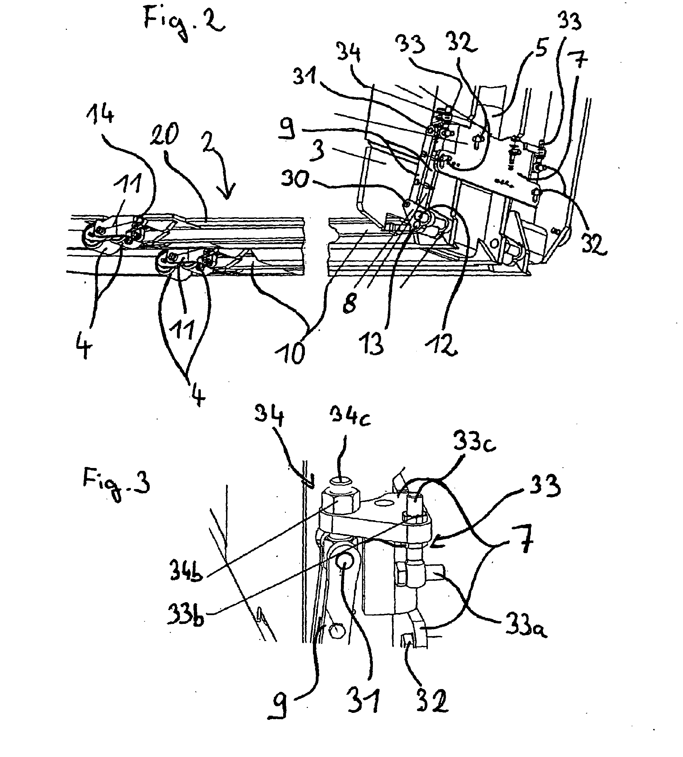

Figur 2 zeigt die Lastgabel 2 des erfindungsgemäßen Niederhubwagens. Zu erkennen ist insbesondere die Ausführung des Gelenkdreiecks 8 als dreieckiger Hebel mit den drei Gelenkachsen 12, 13, 30. Die Stange 9, die an der dritten Gelenkachse 30 angreift, ist an ihrem oberen Ende mit der dritten Gelenkachse 31 an der Verbindungsplatte 7 gelagert. Die Verbindungsplatte 7 kann mit Schrauben 32 an dem Antriebsteil (Pos. 1, Fig. 1) befestigt werden. Hierbei ist eine genaue Justierung der Position der Verbindungsplatte 7 dadurch möglich, dass die Schraubenlöcher in der Verbindungsplatte 7 als Langlöcher ausgeführt sind.

Eine Feinjustierung der Lastgabel 2 ist in zweierlei Hinsicht möglich. Zum einen sind Mittel 33 vorgesehen, mit denen unter Ausnutzung der oben erwähnten Langlöcher die vertikale Position der Verbindungsplatte 7 fein eingestellt werden kann. Zum anderen kann mit dem Mittel 34 die Rotationsstellung des Hebeldreiecks fein eingestellt werden. Dies ermöglicht es, die Lastrollen 4 unabhängig von einer Betätigung des Stellglieds 5 zu verstellen, womit die Gabelzinken 20 beispielsweise parallel zur Fahrbahnoberfläche ausgerichtet werden können.

Figur 3 ist eine Detailansicht der Mittel 33, 34 zum Feinjustieren der Lastgabel. Die Mittel 33, 34 greifen an einem waagrechten Fortsatz der Verbindungsplatte 7 an. Das Mittel 33, das zum Einstellen der vertikalen Position der Verbindungsplatte 7 dient, kann mit einer Schraube 33a in den Antriebsteil eingeschraubt werden. Der eigentliche Einstellvorgang erfolgt mit auf einen Gewindebolzen 33c aufgeschraubten Muttern 33b.

Mit dem Mittel 34 kann die vertikale Position der Gelenkachse 31 eingestellt werden. Mit der Gelenkachse 31 ist hierzu ein Gewindebolzen 34c verbunden. Die Einstellung erfolgt mittels Muttern 34b, die auf den Gewindebolzen 34c aufgeschraubt sind.

## Patentansprüche

1. Niederhubwagen mit einer Lastgabel (2), welche relativ zu einem Antriebsteil (1) des Niederhubwagens anhebbar ist, wobei die Lastgabel (2) gegenüber dem Antriebsteil (1) mit einem krafterzeugenden, längenveränderlichen Stellglied (5) abgestützt ist und gegenüber einer Fahrbahn mit mindestens einer Lastrolle (4) abgestützt ist, deren vertikaler Abstand relativ zur Lastgabel (2) mittels einer Hebelanordnung (6) verstellbar ist, wobei die Hebelanordnung derart ausgeführt ist, dass mit der Hebelanordnung (6) eine vertikale Bewegung des dem Stellglied (5) benachbarten Teils der Lastgabel (2) auf die Lastrolle (4) übertragen wird, wobei die Hebelanordnung (6) ein Gelenkdreieck (8) umfasst, welches
- mit einer ersten Gelenkachse (12) schwenkbar an der Lastgabel (2) gelagert ist,
- mit einer zweiten Gelenkachse (30) über eine Stange (9) direkt oder indirekt mit dem Antriebsteil (1) verbunden ist und
- mit einer dritten Gelenkachse (13) mit einer zu der Lastrolle (4) führenden Längsstange (10) verbunden ist, **dadurch gekennzeichnet, dass** ein Mittel (34) zum Feineinstellen der Rotationsposition des Gelenkdreiecks (8) vorgesehen ist.

2. Niederhubwagen nach Anspruch 1, **dadurch gekennzeichnet, dass** die Stange (9) gelenkig mit einer Verbindungsplatte (7) verbunden ist, welche starr mit dem Antriebsteil (1) verbindbar ist.

3. Niederhubwagen nach Anspruch 2, **dadurch gekennzeichnet, dass** die starre Verbindung zwischen der Verbindungsplatte (7) und dem Antriebsteil (1) lösbar ist.

4. Niederhubwagen nach Anspruch 2 oder 3, **dadurch gekennzeichnet, dass** ein Mittel (33) zum Einstellen der vertikalen Position der Verbindungsplatte (7) relativ zum Antriebsteil (1) vorgesehen ist.

5. Niederhubwagen nach einem der Ansprüche 2 bis 4, **dadurch gekennzeichnet, dass** die Stange (9) mit einer vierten Gelenkachse (31) an der Verbindungsplatte (7) gelagert ist.

6. Niederhubwagen nach Anspruch 5, **dadurch gekennzeichnet, dass** das Mittel (34) zum Einstellen der vertikalen Position der vierten Gelenkachse (31) relativ zu der Verbindungsplatte (7) vorgesehen ist.

7. Niederhubwagen nach einem der Ansprüche 2 bis 6, **dadurch gekennzeichnet, dass** das Stellglied (5) derart angeordnet ist, dass es zwischen der Lastgabel (2) und der Verbindungsplatte (7) wirkt.

8. Niederhubwagen nach einem der Ansprüche 2 bis 7, **dadurch gekennzeichnet, dass** das Mittel (34) zum Feineinstellen der Rotationsposition des Gelenkdreiecks (8) derart angeordnet sind, dass das Mittel (34) bei montierter Lastgabel (2), wenn die Verbindungsplatte (7) mit dem Antriebsteil (1) verbunden ist, zugänglich ist.

9. Niederhubwagen nach einem der Ansprüche 4 bis 8, **dadurch gekennzeichnet, dass** das Mittel (33) zum Einstellen der vertikalen Position der Verbindungsplatte (7) relativ zum Antriebsteil (1) derart angeordnet sind, dass das Mittel (33) bei montierter Lastgabel (2), wenn die Verbindungsplatte (7) mit dem Antriebsteil (1) verbunden ist, zugänglich ist.

## Claims

1. Low-reach pallet truck with a load fork (2), which can be raised relative to a drive part (1) of the low-reach pallet truck, the load fork (2) being supported with respect to the drive part (1) by a force-generating, variable-length actuating element (5) and being supported with respect to a travel path by at least one load roller (4), whose vertical distance relative to the load fork (2) can be adjusted by means of a lever arrangement (6), the lever arrangement being designed in such a way that a vertical movement of that part of the load fork (2) which is adjacent to the actuating element (5) is transmitted to the load roller (4) by the lever arrangement (6), the lever arrangement (6) comprising a three-bar linkage (8), which
- is mounted with a first articulated axle (12) pivotably on the load fork (2),
- is connected with a second articulated axle (30) via a bar (9) directly or indirectly to the drive part (1), and
- is connected with a third articulated axle (13) to a longitudinal bar (10), which leads to the load roller (4), **characterized in that** a means (34) for finely adjusting the rotary position of the three-bar linkage (8) is provided.

2. Low-reach pallet truck according to Claim 1, **characterized in that** the bar (9) is connected in articulated fashion to a connecting plate (7), which can be rigidly connected to the drive part (1).

3. Low-reach pallet truck according to Claim 2, **characterized in that** the rigid connection between the connecting plate (7) and the drive part (1) is releasable.

4. Low-reach pallet truck according to Claim 2 or 3, **characterized in that** a means (33) for adjusting the vertical position of the connecting plate (7) relative to the drive part (1) is provided.

5. Low-reach pallet truck according to one of Claims 2 to 4, **characterized in that** the bar (9) is mounted with a fourth articulated axle (31) on the connecting plate (7).

6. Low-reach pallet truck according to Claim 5, **characterized in that** the means (34) for adjusting the vertical position of the fourth articulated axle (31) relative to the connecting plate (7) is provided.

7. Low-reach pallet truck according to one of Claims 2 to 6, **characterized in that** the actuating element (5) is arranged in such a way that it acts between the load fork (2) and the connecting plate (7).

8. Low-reach pallet truck according to one of Claims 2 to 7, **characterized in that** the means (34) for finely adjusting the rotary position of the three-bar linkage (8) is arranged in such a way that the means (34) is accessible when the load fork (2) is fitted if the connecting plate (7) is connected to the drive part (1).

9. Low-reach pallet truck according to one of Claims 4 to 8, **characterized in that** the means (33) for adjusting the vertical position of the connecting plate (7) relative to the drive part (1) is arranged in such a way that the means (33) is accessible when the load fork (2) is fitted if the connecting plate (7) is connected to the drive part (1).

## Revendications

1. Chariot élévateur à faible levée comprenant une fourche de chargement (2), qui peut être soulevée par rapport à une partie d'entraînement (1) du chariot élévateur à faible levée, la fourche de chargement (2) étant supportée par rapport à la partie d'entraînement (1) par un organe de commande (5) générateur de force et de longueur variable, et étant supportée par rapport à une voie de transport par au moins une roulette de support (4), dont la distance verticale par rapport à la fourche de chargement (2) peut être ajustée au moyen d'un agencement de levier (6), l'agencement de levier étant réalisé de telle sorte qu'un mouvement vertical de la partie de la fourche de chargement (2) adjacente à l'organe de commande (5) soit transmis à la roulette de support (4) par l'agencement de levier (6), l'agencement de levier (6) comprenant un triangle articulé (8),
- qui est monté avec un premier axe d'articulation (12) de manière pivotante sur la fourche de chargement (2),
- qui est connecté directement ou indirectement à la partie d'entraînement (1) par un deuxième axe d'articulation (30) au moyen d'une barre (9), et
- qui est connecté à une barre longitudinale (10) conduisant à la roulette de support (4) par un troisième axe d'articulation (13), **caractérisé en ce qu'**un moyen (34) est prévu pour ajuster précisément la position de rotation du triangle articulé (8).

2. Chariot élévateur à faible levée selon la revendication 1, **caractérisé en ce que** la barre (9) est connectée de manière articulée à une plaque de connexion (7) qui peut être connectée rigidement à la partie d'entraînement (1).

3. Chariot élévateur à faible levée selon la revendication 2, **caractérisé en ce que** la connexion rigide entre la plaque de connexion (7) et la partie d'entraînement (1) peut être desserrée.

4. Chariot élévateur à faible levée selon la revendication 2 ou 3, **caractérisé en ce que** l'on prévoit un moyen (33) pour ajuster la position verticale de la plaque de connexion (7) par rapport à la partie d'entraînement (1).

5. Chariot élévateur à faible levée selon l'une quelconque des revendications 2 à 4, **caractérisé en ce que** la barre (9) est montée avec un quatrième axe d'articulation (31) sur la plaque de connexion (7).

6. Chariot élévateur à faible levée selon la revendication 5, **caractérisé en ce que** le moyen (34) est prévu pour ajuster la position verticale du quatrième axe d'articulation (31) par rapport à la plaque de connexion (7).

7. Chariot élévateur à faible levée selon l'une quelconque des revendications 2 à 6, **caractérisé en ce que** l'organe de commande (5) est disposé de telle sorte qu'il agisse entre la fourche de chargement (2) et la plaque de connexion (7).

8. Chariot élévateur à faible levée selon l'une quelconque des revendications 2 à 7, **caractérisé en ce que** le moyen (34) pour l'ajustement précis de la position de rotation du triangle articulé (8) est disposé de telle sorte que le moyen (34) soit accessible lorsque la fourche de chargement (2) est montée, quand la plaque de connexion (7) est connectée à la partie d'entraînement (1).

9. Chariot élévateur à faible levée selon l'une quelconque des revendications 4 à 8, **caractérisé en ce que** le moyen (33) pour ajuster la position verticale de la plaque de connexion (7) par rapport à la partie d'entraînement (1) est disposé de telle sorte que le moyen (33) soit accessible, lorsque la fourche de chargement (2) est montée, quand la plaque de connexion (7) est connectée à la partie d'entraînement (1).
